# EUROPEAN PATENT APPLICATION

(11) **EP 4 567 980 A1**
(43) Date of publication of application: **11.06.2025**
(21) Application number: 23215031.8
(22) Date of filing: 07.12.2023
(51) Int. Cl.: H01M 50/204, H01M 50/298, H01M 50/503, H01M 50/517, H01M 50/526

(54) **CELL CONTACTING SYSTEM AND BATTERY WITH A CELL CONTACTING SYSTEM**

(71) Applicant: Röchling Automotive SE, 68165 Mannheim (DE)
(72) Inventor: DiPauli, Ferdinando, 39100 Bolzano (IT); Frenez, Luca, 39100 Bolzano (IT); Albrizio, Chiara, 39055 Laives (IT); Bragagnolo, Mirco, 35015 Galliera Veneta (IT)
(74) Representative: Ullrich & Naumann PartG mbB

(57) **Abstract**

The invention relates to a cell contacting system (1) for electrically contacting a plurality of battery cells (101) of a battery, comprising
at least one electrical conductor (2) for transporting electric current from and/or to one or more battery cells, and
at least one structural component (3) adapted to provide mechanical stability and electrical insulation to said at least one electrical conductor, wherein said at least one structural component covers a part, "covered part" (4), of said at least one electrical conductor and comprises at least one polymer.

## Description

The invention relates to a cell contacting system for electrically contacting a plurality of battery cells of a battery, comprising at least one electrical conductor for transporting electric current from and/or to one or more battery cells, and at least one structural component adapted to provide mechanical stability and electrical insulation to said at least one electrical conductor.

The invention further relates to a battery, comprising a cell contacting system.

Although applicable to any kind of cell contacting systems, the present invention will be described with regard to cell contacting systems for battery cells in an electric vehicle.

Motor vehicles, when powered by one or more electric motors, comprise one or more batteries for providing electric power to the electric motors and to on-board electrical systems. Typically, a battery comprises a series of battery modules, wherein each module itself comprises a plurality of battery cells. To provide the required power for the electric motor and the on-board systems, the battery cells are connected via a cell contacting system.

US 2018/0375082 A1 shows a cell contacting system, comprising a wiring module to be attached to an electricity storage element group in which a plurality of electricity storage elements having electrodes are lined up includes a plurality of busbars to be connected to the electrodes and a plurality of accommodating portions in which the busbars are respectively accommodated. Each of the accommodating portions has an accommodating wall that is disposed around the busbar, and the accommodating wall includes a first adjoining wall and a second adjoining wall opposing the first adjoining wall. The first adjoining wall of one accommodating portion and the second adjoining wall of another accommodating portion are arranged adjoining each other. The first adjoining wall has a first locking portion that locks the busbar and an auxiliary wall that protrudes toward the second adjoining wall and covers the first locking portion from the second adjoining wall side. The second adjoining wall has an opening in which the auxiliary wall is accommodated.

Further cell contacting systems are disclosed in EP 4 235 941 A1 and EP 4 243 190 A1.

One of the disadvantages however is the limited flexibility in terms of arrangement of battery cells to be connected with the cell contacting system. Further, only a limited number of electrical connections between different battery cells is possible, thus limiting the voltage and/or the capacity of the battery pack, which can be provided by such a cell contacting system. Even further, a complicated structure of the cell contacting system results in high production costs by requiring separate production steps for carrier and busbars.

One of the objectives of the present invention is therefore to provide a cell contacting system and a battery, comprising a cell contacting system, which provide a higher flexibility in terms of space for arranging in particular cylindrical battery cells and thus provide a higher voltage and/or capacity of the battery pack, which can be provided by a cell contacting system while allowing for an easy and fast manufacture with low costs and ensuring a more reliable operation.

A further objective of the present invention is to provide an alternative cell contacting system and an alternative battery, comprising a cell contacting system.

In an embodiment, the present invention may solve at least one of the objectives with a cell contacting system for electrically contacting a plurality of battery cells of a battery, comprising
at least one electrical conductor for transporting electric current from and/or to one or more battery cells, and
at least one structural component adapted to provide mechanical stability and electrical insulation to said at least one electrical conductor,
characterized in that
said at least one structural component covers a part, "covered part", of said at least one electrical conductor and comprises at least one polymer

In an embodiment, the present invention may solve at least one of the objectives with a battery, comprising a cell contacting system according to one of the claims 1-14.

In an embodiment, the present invention may solve at least one of the objectives with a method for providing a cell contacting system according to one of the claims 1-14, wherein said at least one structural component is partially molded over said at least one electrical conductor using an injection mold.

One of the advantages may be that an electrical insulation is provided to prevent short circuits allowing for a reliable operation of the cell contacting system. Further, an easier manufacturing with lower costs may be provided. Even further, less material can be used, thus providing a lower overall weight. Even further, flexibility is enhanced regarding different geometries of the arrangement of battery cells while providing sufficient stability.

Further features, advantages and preferred embodiments are disclosed or may become apparent in the following.

According to a preferred embodiment, said at least one polymer of said at least structural component comprises a thermoplastic, preferably an amorphous polymer, for example polymethyl methacrylate and/or polystyrene and/or polycarbonate. This may allow for a cheap manufacturing while providing enough strength for structural support of said at least one electrical conductor.

According to a further preferred embodiment, said at least one electrical conductor and said at least one structural component are joined by a form-fit and/or force-fit and/or bonding connection, preferably by overmolding. This may enable a flexible connection of said at least one structural component and said at least one electrical conductor regarding to external requirements. Said connection is preferably provided by at least one fixing element for fixing said at least one structural component with said at least one electrical conductor and/or said band-like structure, preferably wherein said at least one fixing element has a T-shaped cross-section for hole insertion.

According to a further preferred embodiment, said connection is provided by at least one fixing element for fixing said at least one structural component with said at least one electrical conductor, preferably wherein said at least one fixing element has a T-shaped cross-section for hole insertion. This may allow for a more reliable connection. Furthermore, the same type of fixing element may be used to assemble/integrate additional elements, such as flexible printed circuit for sensing purpose. In this way, additional functionalities can be easily integrated into the cell contacting system.

According to a further preferred embodiment, said covered part comprises 10 % to 90 %, preferably 25 % to 75 %, more preferably 40 % to 60 % of a surface of said at least one electrical conductor. This may provide a sufficient surface of the electrical conductor provided with electrical insulation while saving material and thus weight and costs.

According to a further preferred embodiment, said at least one electrical conductor comprises a bottom surface and a top surface, wherein said top surface faces away from the battery cells when arranged with said cell contacting system and wherein said bottom surface faces towards said battery cells when arranged with said cell contacting system, wherein said covered part comprises at least a part of said bottom surface. One of the advantages may be that a sufficient electrical insulation towards the battery cells is provided, so that short cuts can be efficiently prevented.

According to a further preferred embodiment, said at least one electrical conductor comprises at least one connection element, preferably a plurality of connection elements for electrically contacting a pole of a battery cell, preferably wherein said at least one connection element is at least in part flexible. This may ensure a reliable electrical connection with the at least one electrical conductor and the battery cells even in case of small movements.

According to a further preferred embodiment, at least two of said connection elements have a different shape to contact different poles of a battery cell. This may further enhance the reliability of the electric connections between the at least one electric conductor and the battery cells.

According to a further preferred embodiment, said at least one electrical conductor is formed such to electrically contact battery cells arranged in a hexagonal structure. One advantage may be that even in case of a space saving arrangement of for instance cylindrical battery cells, a reliable connection between the battery cells with the cell contacting system can be provided.

According to a further preferred embodiment, said at least one structural component and said at least one electrical conductor each comprise at least one alignment element for aligning said at least one structural component and said at least one electrical conductor with each other and/or with the battery cells, preferably wherein said alignment elements are provided as holes. This may allow for an easy and fast manufacture of the cell contacting system. Furthermore, said at least one structural component may integrate alignment elements to allow a precise positioning on the battery cells cluster.

According to a further preferred embodiment, said at least one structural component comprises at least one distance element for spacing apart said cell contacting system from said battery cells. This may allow for a reliable attachment of the cell contacting system with the battery cells. Said at least one structural component may comprise one or more geometrical features providing one or more certain mechanical properties, such as protecting said at least one electrical conductor from impact and/or transmitting tensile and/or shear stress to other nearby structural components.

According to a further preferred embodiment, said at least one structural component comprises at least one support element, preferably in form of a rib, preferably an arc-like rib, for supporting said at least one structural component at said battery cells. This may allow for a reliable relative position of the cell contacting system and the battery cells and therefore enables a reliable electric connection of the battery cells with said at least one electrical conductor. Further, a reduced weight and reduced costs can be accomplished since a lesser amount of said at least one polymer is needed for providing sufficient mechanical stability. An easy manufacturing of said at least one structural component can also be provided by injection molding. In case the supporting element is provided in form a rib, the rib can allow also for an easy spacing and/or alignment of said at least one structural component relative to the battery cells. Even further, additional elements could be integrated on one or both sides of the said at least one structural component to grant, fulfil or meet certain mechanical requirements, for example granting impact protection of the electrical conductor and/or transmitting tensile and/or shear stresses to nearby components.

According to a further preferred embodiment, a plurality of structural components are arranged, which are connectable with each other, preferably releasably, by at least one connection. This may allow for an easy manufacturing while providing a high flexibility in terms of different numbers of battery cells in different batteries.

According to a further preferred embodiment, said at least one connection is provided by a form- and/or friction locking connection, preferably a clip- or snap-in-connection. This may allow for an even easier, simpler and faster connection for a plurality of structural components, which may for example then form a grid-like structure to connect to the battery cells.

According to a further preferred embodiment, said at least one structural component comprises reinforcement fibers, preferably glass fibers, mineral fillers and/or glass globes fillers, and/or that said at least one electrical conductor comprises at least one metal, preferably aluminum and/or copper. This may further provide a larger structural support, while lowering the material use and a reliable electric connection.

According to a further preferred embodiment, said at least one structural component comprises at least one fixing portion for connecting said at least one structural component to another structural component, preferably wherein said at least one fixing portion comprises a U-shaped opening for inserting a part of the other structural component. This may allow for an easy connection of different structural components forming a grid-like structure.

According to a further preferred embodiment, said at least one electrical conductor comprises band-like structure, preferably in form of a flexible printed circuit, FPC. This may provide a reduced weight while providing an easy manufacturing and the integration of additional functionalities, such as voltage and/or temperature sensing. Furthermore, one or more band-like structures, preferably in form of a flexible printed circuit - FPC -, can be electrically connected to said at least one electrical conductor for voltage and/or temperature sensing.

According to a further preferred embodiment, a force preferably in form of a pressure or weight, is applied, preferably by a bending and/or forming system and/or a rolling mill, to the cell contacting system during and/or after overmolding for reducing shrinkage deformations. This may allow for reducing shrinking deformations, e.g. caused by different coefficients of thermal expansion of the materials of the electrical conductor and the structural component during the manufacturing process, which in turn may allow for a cost reduction for manufacturing the cell contacting system.

A cell contacting system according to one or more embodiments of the invention can be provided by partially molding said at least one structural component over said at least one electrical conductor using an injection mold. More preferably, a force, preferably in form of a pressure or weight, can be applied, preferably by a bending and/or forming system and/or a rolling mill, to the cell contacting system during and/or after overmolding for reducing shrinkage deformations.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a cell contacting system according to an embodiment of the present invention in top view;
- Fig. 2: part of a battery according to an embodiment of the present invention;
- Fig. 3: a detailed view of the part of figure 2;
- Fig. 4: a detailed view of a connection between the structural component and the electrical conductor of a cell contacting system according to an embodiment of the present invention; and
- Fig. 5: a detailed view of portion for connecting different structural components of a cell contacting system according to an embodiment of the present invention.

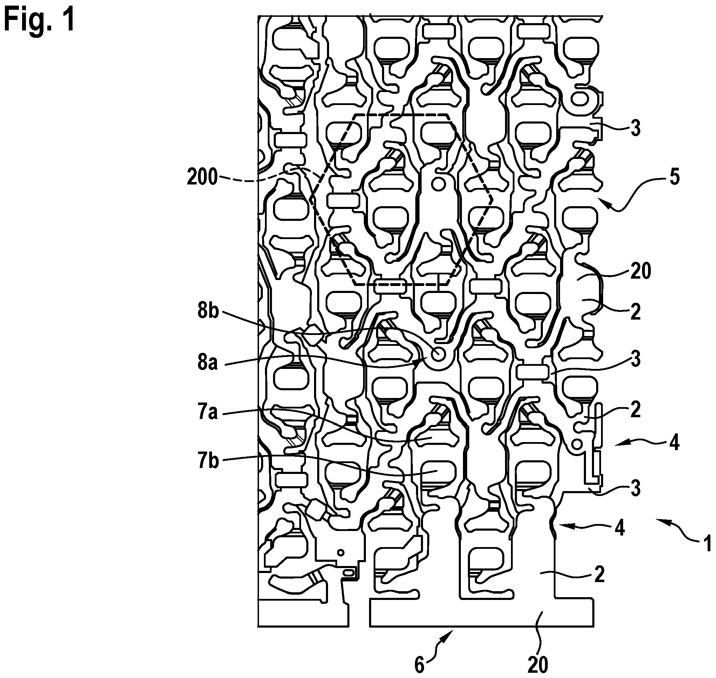

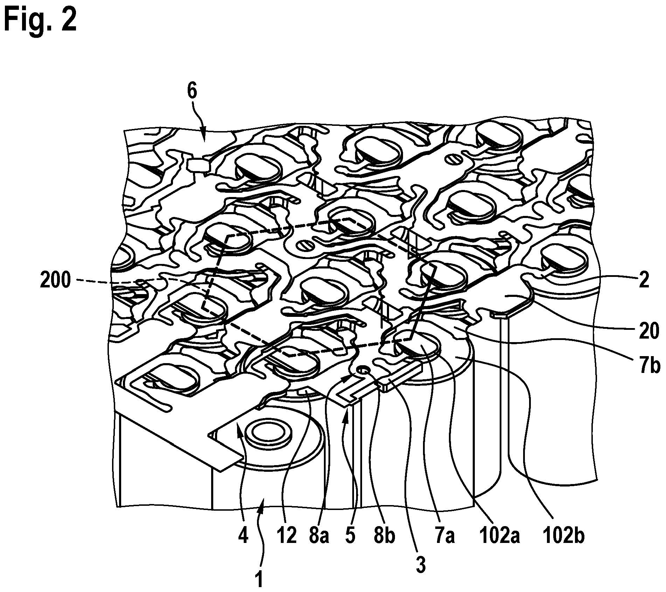

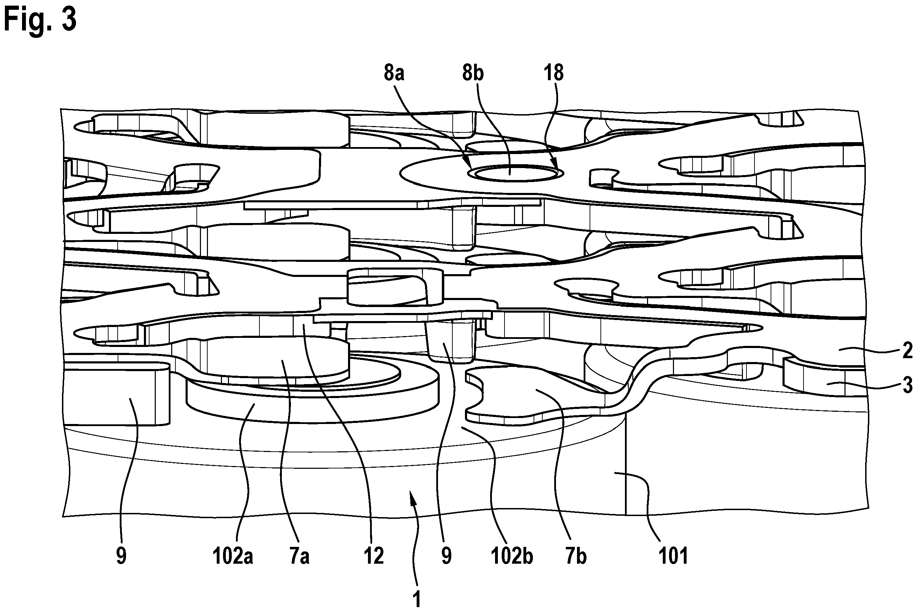

Figure 1 shows a cell contacting system according to an embodiment of the present invention in top view, Figure 2 shows part of a battery according to an embodiment of the present invention and Figure 3 shows a detailed view of the part of Figure 2.

In Figure 1, a cell contacting system 1 is shown, comprising a plurality of electrical conductors 2 and a plurality of structural components 3. The structural components 3, which are arranged on a bottom surface 5 of the electrical conductors 2, provide electric insulation towards the battery cells 101 (not shown in Figure 1) and cover therefore a part 4 of the electrical conductor 2. On a top surface 6 of the electric conductor 2, no insulation material is arranged, in particular the top surface 6 is free of the structural component 3. Both, the electrical conductors 2 as well as the structural components 3, are aligned with each other via through holes 8a, 8b. The through hole 8a of the structural component 3 comprises an inner flange 18 (see Figure 3) extending through the through hole 8b of the electrical conductor 2. Each electrical conductor 2 comprises a plurality of electric connection elements 7a, 7b to electrically connect an electrical conductor 2 to the poles 102a, 102b (not shown in Figure 1) of the battery cells 101. The connection elements 7a, 7b and the electrical conductor 2 are formed such to connect to battery cells 101 of a battery 100 having an arrangement in or of a general hexagonal structure 200. The connection elements 7a, 7b provide a certain flexibility, i.e. are resiliently connected with a body 20 of an electrical conductor 2. The body 20 connects the different connection elements 7a, 7b for connecting different battery cells 101. The connection elements 7a, 7b have a different form so that different connections elements 7a, 7b could connect to different poles 102a, 102b of a battery cell 101. The poles 102a, 102b in Figures 1-3 are arranged on the same side of the battery cell 101.

Towards the battery cells 101 on the bottom surface 5 of the structural components 3, arc-shaped ribs 12 (not shown in Figure 1) are provided in the vicinity of the connection elements 7a, 7b. These ribs 12 provide support when arranging the battery cells 101 to electrically connect the poles 102a, 102b to the connection elements 7a, 7b.

Further, in the bottom surface 5 of the structural components 3, distance elements 9 (see Figure 2) are provided such that the cell contacting system 1 has a defined distance to the battery cells 101.

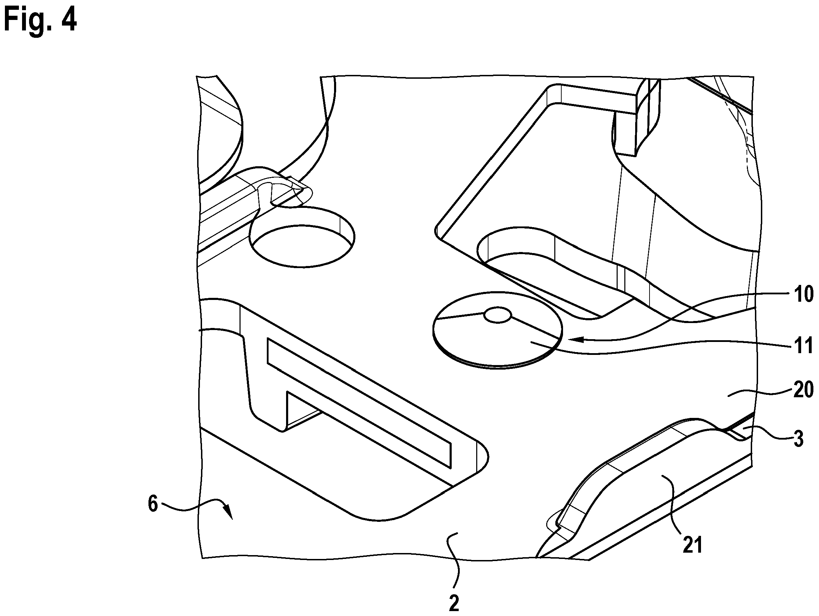

Figure 4 shows a detailed view of a connection between the structural component and the electrical conductor of a cell contacting system according to an embodiment of the present invention.

In Figure 4, the upper surface 6 of an electrical conductor 2 is shown. Said electrical conductor 2 in Figure 4 is a flexible printed circuit (band-like structure), FPC, which comprises electrical conductors (copper tracks) but it has a different function as compared to the electrical conductors, preferably in form of aluminum structures, previously described with the same reference sign. While the aluminum elements or structures are used to inter-connect different cells, thus may carry current, the electrical conductor 2 in form of an FPC is in this embodiment used to acquire signals, preferably voltage and/or temperature signals, for sensing/monitoring purposes. In the body 20 of the electrical conductor 2, a hole (not shown) is provided such that a rivet 11 of the structural component 3, having an umbrella-like top, attaches the structural component 3 with the electrical conductor 2 with said rivet 11 providing a form-fitting connection 10. Further, vertical protrusions 21, preferably bridge-like or arc-like protrusions, of the structural component 3 in direction to the upper surface 6 of the electrical conductor 2 and beyond further, align the structural component 3 with the electrical conductor 2.

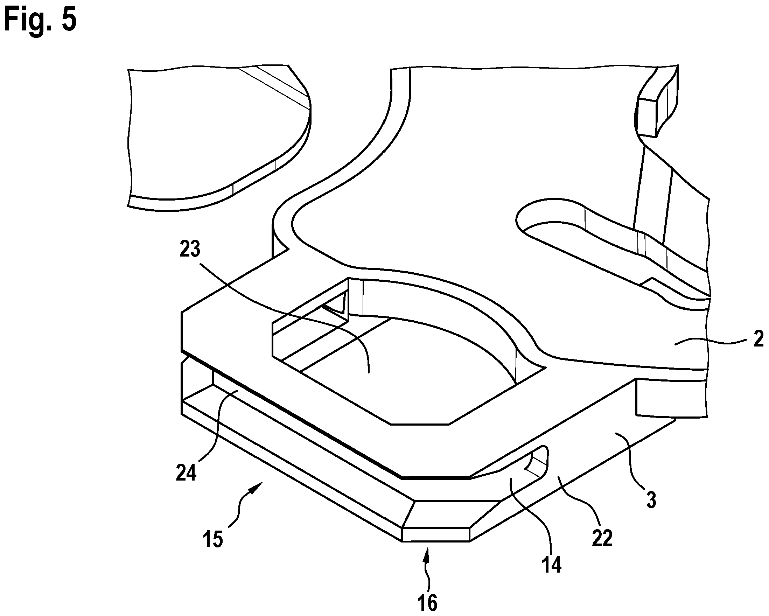

Figure 5 shows a detailed view of portion for connecting different structural components of a cell contacting system according to an embodiment of the present invention.

In Figure 5 an area 16 of the structural component 3 is shown, comprising a flat horizontal protrusion 22. The horizontal protrusion 22 has a U-shaped edge 14 with a central opening 23. The U-shaped edge 14 further has on the side opposite to the structural component 3 a U-shaped opening 24 extending horizontally, i.e. in the plane of the protrusion 22 and the structural component 3. In this opening 24, a part of a further structural component 3 can be inserted such that two structural components 3 can be connected with each other providing a friction-locking and/or a snap-in connection 15.

At least one embodiment may provide at least one of the following features and/or at least one of the following advantages:
- Easy and less cost-intensive manufacturing.
- Reduced construction space.
- Reliable operation.
- High integration level.
- Reduced weight.
- Reliable electrical insulation.
- At least sufficient mechanical stability and load transmission.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Cell contacting system
- 2: Electrical conductor
- 3: Structural component
- 4: Covered part
- 5: Bottom surface
- 6: Upper surface
- 7a, 7b: Electrical connection element
- 8a, 8b: Through hole
- 9: Distance element
- 10: Connection
- 11: Rivet
- 12: Arc-shaped rib
- 14: U-shaped edge
- 15: Snap-in connection
- 16: Portion/Area
- 18: Inner flange
- 20: Body
- 21: Vertical protrusion
- 22: Horizontal protrusion
- 23: Central opening
- 24: U-shaped opening
- 100: Battery
- 101: Battery cell
- 102a, 102b: Pole battery cell
- 200: Hexagonal structure

## Claims

1. Cell contacting system (1) for electrically contacting a plurality of battery cells (101) of a battery (100), comprising
at least one electrical conductor (2) for transporting electric current from and/or to one or more battery cells (101), and
at least one structural component (3) adapted to provide mechanical stability and electrical insulation to said at least one electrical conductor (2),
**characterized in that**
said at least one structural component (3) covers a part, "covered part" (4), of said at least one electrical conductor (2), and comprises at least one polymer.

2. Cell contacting system (1) according to claim 1, **characterized in that** said at least one polymer of said at least one structural component (3) comprises a thermoplastic, preferably an amorphous polymer, for example polymethyl methacrylate and/or polystyrene and/or polycarbonate.

3. Cell contacting system (1) according to one of the claims 1-2, **characterized in that** said at least one electrical conductor (2) and said at least one structural component (3) are joined by a form-fit and/or force-fit and/or bonding connection (10), preferably by overmolding.

4. Cell contacting system (1) according to claim 3, **characterized in that** said connection (10) is provided by at least one fixing element (11) for fixing said at least one structural component (3) with said at least one electrical conductor (2), preferably wherein said at least one fixing element (11) has a T-shaped cross-section for hole insertion.

5. Cell contacting system (1) according to one of the claims 1-4, **characterized in that** said covered part (4) comprises 10 % to 90 %, preferably 25 % to 75 %, more preferably 40 % to 60 % of a surface (5) of said at least one electrical conductor (2).

6. Cell contacting system (1) according to one of the claims 1-5, **characterized in that** said at least one electrical conductor (2) comprises a bottom surface (5) and a top surface (6), wherein said top surface (6) faces away from the battery cells (101) when arranged with said cell contacting system (1) and wherein said bottom surface (5) faces towards said battery cells (101) when arranged with said cell contacting system (1), wherein said covered part (4) comprises at least a part of said bottom surface (5).

7. Cell contacting system (1) according to one of the claims 1-6, **characterized in that** said at least one electrical conductor (2) comprises at least one connection element (7a, 7b), preferably a plurality of connection elements (7a, 7b), for electrically contacting a pole (102a, 102b) of a battery cell (101), preferably wherein said connection element (7a, 7b) is at least in part flexible.

8. Cell contacting system (1) according to claim 7, **characterized in that** at least two of said connection elements (7a, 7b) have a different shape to contact different poles (102a, 102b) of a battery cell (101).

9. Cell contacting system (1) according to one of the claims 1-8, **characterized in that** said at least one electrical conductor (2) is formed such to electrically contact battery cells (102a, 102b) arranged in a hexagonal structure (200).

10. Cell contacting system (1) according to one of the claims 1-9, **characterized in that** said at least one structural component (3) and said at least one electrical conductor (2) each comprise at least one alignment element (8a, 8b) for aligning said at least one structural component (3) and said at least one electrical conductor (2) with each other and/or with the battery cells (102a, 102b), preferably wherein said alignment elements (8a, 8b) are provided as holes.

11. Cell contacting system (1) according to one of the claims 1-10, **characterized in that** said at least one structural component (3) comprises at least one distance element (9) for spacing apart said cell contacting system (1) from said battery cells (101) and/or at least one support element (12), preferably in form of a rib, preferably an arc-like rib, for supporting said at least one structural component (3) of said battery cells (101).

12. Cell contacting system (1) according to one of the claims 1-11, **characterized in that** a plurality of structural components (3) are arranged, which are connectable with each other, preferably releasably, by at least one connection (10), preferably being provided by a form- and/or friction locking connection, preferably a clip- or snap-in-connection (15).

13. Cell contacting system (1) according to one of the claims 1-12, **characterized in that** said at least one structural component (3) comprises reinforcement fibers, preferably glass fibers, mineral fillers and/or glass globes fillers, and/or that said at least one electrical conductor (2) comprises at least one metal, preferably aluminum and/or copper.

14. Cell contacting system (1) according to one of the claims 1-13, **characterized in that** said at least one structural component (3) comprises at least one fixing portion (16) for connecting said at least one structural component (3) to another structural component (3), preferably wherein said at least one fixing portion (16) comprises a U-shaped opening (24) for inserting a part of the other structural component (3).

15. Battery (100), comprising a cell contacting system (1) according to one of the claims 1-14.
